# EUROPÄISCHE PATENTSCHRIFT

(11) **EP 0 618 842 B1**
(45) Veröffentlichungstag und Bekanntmachung des Hinweises auf die Patenterteilung: **11.03.1998**
(21) Anmeldenummer: 93900102.0
(22) Anmeldetag: 17.12.1992
(51) Int. Cl.: B01J 35/04, F01N 3/20, F01N 3/28

(54) **WABENKÖRPER MIT EINER INNENSTRUKTUR, DIE DURCH EINE STÜTZSTRUKTUR GEHALTEN IST**
HONEYCOMB CONSTRUCTION WITH AN INNER STRUCTURE HELD BY A SUPPORT STRUCTURE
SUPPORT EN NID D'ABEILLES DONT LA STRUCTURE INTERNE EST RENFORCEE PAR UNE STRUCTURE DE MAINTIEN

(30) Priorität: 21.12.1991 DE 4142597
(43) Veröffentlichungstag der Anmeldung: 12.10.1994
(73) Patentinhaber: Emitec Gesellschaft für Emissionstechnologie mbH, 53797 Lohmar (DE)
(72) Erfinder: BRÜCK, Rolf, D-5060 Bergisch-Gladbach 1 (DE)
(74) Vertreter: Kahlhöfer, Hermann, Dipl.-Phys.
(86) Internationale Anmeldenummer: EP9202934
(87) Internationale Veröffentlichungsnummer: WO9312880

(56) Entgegenhaltungen:
- EP-A- 0 279 159
- WO-A-90/12951
- DE-A- 4 111 629

## Beschreibung

Die Erfindung betrifft einen zumindest ein Blech aufweisenden Wabenkörper, der eine Achse hat, entlang welcher er von einem Fluid durchsetzbar ist und entlang welcher er von zumindest zwei einander gegenüberliegenden Stirnseiten begrenzt ist.

Die Erfindung bezieht sich insbesondere auf Wabenkörper, die als Trägerkörper für Katalysatoren, z.B. in Abgassystemen von Kraftfahrzeugen, geeignet und bestimmt sind.

Wabenkörper, die aus metallischen Strukturen, insbesondere zumindest teilweise strukturierten Blechen gebildet sind, sind beschrieben in der WO 89/07488 A1 und der WO 90/023220 A1. Zur Bildung solcher Wabenkörper werden Bleche, darunter gewellte Bleche, lagenweise geschichtet und um eine Achse gewunden; zur Erhöhung der mechanischen Stabilität können die Lagen teilweise verstärkt sein, wobei Verstärkungen sich nicht über die ganze Länge eines Wabenkörpers entlang seiner Achse erstrecken müssen, sondern auf Teilbereiche, insbesondere auf Teilbereiche in der Nähe von Stirnseiten des Wabenkörpers, begrenzt sein können.

Zur gezielten Beeinflussung der Durchströmung eines Wabenkörpers mit einem Fluid, beispielsweise mit Abgas aus einem Verbrennungsmotor, können die einen Wabenkörper bildenden Bleche mit kleinen Strukturen versehen sein. An solchen Strukturen treten beispielsweise Turbulenzen auf, die den Kontakt des Fluides mit dem Wabenkörper verbessern und so eine durch einen Katalysator auf dem Wabenkörper bewirkte Reaktion in dem Fluid unterstützen. Gemäß der WO 90/08249 A1 sind die einen Wabenkörper bildenden Bleche mit Mikrostrukturen, die quer oder winklig zur Strömungsrichtung des Fluides verlaufen, versehen. Solche Mikrostrukturen sind beispielsweise Rillen, Sicken, Noppen oder Nuten. Gemaß der WO 91/01178 A1 sind die den Wabenkörper bildenden Bleche mit Öffnungen versehen, denen Strömungsleitflächen zugeordnet sind; solche Strömungsleitflächen können Teilströme des den Wabenkörper durchströmenden Fluids durch die Öffnungen leiten und somit Grenzschichteffekte vermindern; durch systematische Anordnung von Öffnungen und Strömungsleitflächen kann zusätzlich eine Vergleichmäßigung des Strömungsprofils in dem Wabenkörper erreicht werden. Gemäß der WO 91/01807 A1 sind gewellte Bleche in dem Wabenkörper mit Umstülpungen versehen, welche Umstülpungen zusätzliche Anströmkanten im Inneren des Wabenkörpers bilden, womit ebenfalls Grenzschichteffekte unterdrückt werden können.

Gemäß der EP 0 279 159A1 ist ein metallischer Katalysator-Trägerkörper gebildet aus einander abwechselnden Lagen zweier unterschiedlich gewellter Bleche. Ein solcher Wabenkörper zeichnet sich aus durch eine besonders hohe mechanische Stabilität; er ist insbesondere geeignet für Anwendungen, bei denen hohe thermische Wechselbelastungen auftreten.

Aus der WO 89/10470 A1 und der WO 89/10471 A1 gehen elektrisch direkt beheizbare, mit Blechen gebildete Wabenkörper hervor. Da übliche Katalysatoren zur Verwendung in den Abgassystemen von Verbrennungsmotoren ihre Wirksamkeit erst bei erhöhten Temperaturen, typisch oberhalb von etwa 300° C, entfalten, tritt beim Beginn der Umströmung eines kalten Katalysators mit Abgas zunächst keine katalysierte Reaktion ein; zunächst muß der Katalysator auf eine hinreichend hohe Temperatur vorgewärmt werden. Um eine solche Vorwärmung zu beschleunigen oder sogar bereits vor der Ingangsetzung eines Verbrennungsmotors zu bewerkstelligen, kann ein metallischer Wabenkörper direkt elektrisch beheizt werden, indem ein elektrischer Strom durch ihn hindurchgeleitet wird. Der elektrische Widerstand des Wabenkörpers muß gegebenenfalls den Eigenschaften der zur Verfügung stehenden elektrischen Stromquelle angepaßt werden; in einem Wabenkörper zum Einsatz in einem Kraftfahrzeug sollte zur Durchleitung des elektrischen Stromes ein Strompfad mit einem Widerstand von einer Größenordnung um 0,1 Ohm vorliegen. Um dies zu erreichen, kann der Wabenkörper durch Spalte und/oder elektrisch isolierende Zwischenschichten bezüglich seiner Querschnittsfläche und/oder seiner axialen Ausdehnung elektrisch unterteilt werden. Gemäß der WO 90/12951 A1 kann die Festigkeit eines elektrisch direkt beheizbaren Wabenkörpers erhöht werden, indem Formschlußverbindungen zwischen Blechen und keramischen Zwischenschichten, wobei jeweils zwei Bleche eine keramische Zwischenschicht einschließen, in den Wabenkörper einbezogen werden.

Die dem Stand der Technik entnehmbaren Hinweise zur Ausgestaltung eines elektrisch direkt beheizbaren Wabenkörpers, speziell eines Wabenkörpers zur Verwendung als Trägerkörper für einen Katalysator im Abgassystem eines Kraftfahrzeuges, gewährleisten nicht in jedem Fall eine hinreichend stabile und mechanisch belastbare Struktur; das Einbringen von Spalten und/oder elektrisch isolierenden Schichten wie z.B. keramischen Schichten kann mit einer Aufgabe von Kraftschlußverbindungen zwischen verschiedenen Lagen in dem Wabenkörper verbunden sein und somit zu einer womöglich unzuträglichen Lockerung des mechanischen Gefüges des Wabenkörpers beitragen.

Die Erfindung basiert daher auf der Aufgabe, einen Wabenkörper anzugeben, bei dem die Gewährleistung eines für eine elektrische Beheizung zuträglichen Widerstandes keine wesentlichen Zugeständnisse hinsichtlich der mechanischen Festigkeit erfordert; bei der Herstellung eines solchen Wabenkörpers sollen zur Bildung der erforderlichen Kraftschlußverbindungen die einfachen und bewährten Möglichkeiten aus der Herstellung elektrisch nicht zu beheizender Wabenkörper einsetzbar sein.

Die erfindungsgemäße Lösung dieser Aufgabe stellt ein Wabenkörper dar, der
a) eine Achse (1) hat, entlang welcher er von einem Fluid durchsetzbar ist;
b) entlang der Achse (1) von zwei einander gegenüberliegenden Stirnseiten (2) begrenzt ist;
c) eine aus einer Mehrzahl von Blechlagen (3, 4) gebildete Innenstruktur (5) aufweist, durch die zur Beheizung ein elektrischer Strom leitbar ist;
   **dadurch gekennzeichnet**, daß der Wabenkörper
d) zum Halten der Innenstruktur (5) an jeder Stirnseite (2) jeweils eine metallische Stützstruktur (6) aufweist, die die einzelnen Blechlagen (3, 4) halten, und daß
e) zwischen der Innenstruktur (5) und der Stützstruktur (6) eine elektrische Isolierung (7, 8) liegt.

In dem erfindungsgemäßen Wabenkörper sind Bestandteile, die mechanische Festigkeit gewährleisten, getrennt von Bestandteilen, die unmittelbar elektrisch beheizbar sind; der Wabenkörper besteht aus einer Innenstruktur, die elektrisch beheizbar ist und bei deren konkreter Ausgestaltung auch alle bereits bekannten Lehren zur Gewährleistung eines einer bestimmten Vorgabe zuträglichen elektrischen Widerstandes verwertbar sind. Weiterhin kann ausgenutzt werden, daß die Innenstruktur keiner besonderen Eigenstabilität bedarf, da die mechanische Festigkeit und Belastbarkeit des Wabenkörpers erfindungsgemäß durch zwei Stützstrukturen bestimmbar ist, welche Stützstrukturen an jeweils einer Stirnseite des Wabenkörpers die Innenstruktur halten, dabei allerdings von der Innenstruktur elektrisch isoliert sind.

Das Anfügen elektrischer Anschlüsse an die Innenstruktur hat zu erfolgen entsprechend der Gestaltung des Strompfades, entlang dem der elektrische Strom durch die Innenstruktur fließt; ein elektrischer Anschluß braucht ebensowenig wie die Innenstruktur selbst mechanische Belastungen aufzunehmen, weshalb erfindungsgemäß zur Auslegung des Strompfades und der elektrischen Anschlüsse eine große Gestaltungsfreiheit gegeben ist.

Die Haltung der Innenstruktur in jeder Stützstruktur erfolgt gemäß einer vorteilhaften Weiterbildung der Erfindung im wesentlichen durch Reibung, beispielsweise dadurch, daß ein die Innenstruktur bildendes Blech in jeder Stützstruktur eingeklemmt ist. Die Haltung durch Reibung ist in der Regel ausreichend, insbesondere dann, wenn der Wabenkörper an der Stützstruktur mit den übrigen Komponenten des Leitungssystems, zu dem er gehört, verbunden ist.

Die Isolierung zwischen Innenstruktur und Stützstruktur ist günstigerweise im wesentlichen zumindest eine keramische Schicht, je nach Ausgestaltung der Innenstruktur und der Stützstruktur eine Mehrzahl oder eine Vielzahl von keramischen Schichten. Keramische Schichten sind thermisch besonders stabil und daher besonders geeignet in Wabenkörpern, die hohen thermischen Belastungen widerstehen müssen. Die keramische Schicht kann eine Beschichtung eines Bleches der Innenstruktur oder der Stützstruktur sein; gemäß einer Variante kann sie auch mit keramischer Fasermatte, Folie aus gesinterter Glaskeramik oder dergleichen gebildet sein. Insbesondere Folien aus gesinterter Glaskeramik sind vorteilhaft, da sie sehr dünn sein können, sehr biegsam sind und nur wenig zu Sprödbrüchen neigen.

Die Halterung der Innenstruktur in jeder Stützstruktur ist günstigerweise dadurch gegeben, daß das Blech in der Innenstruktur von einem in der Stützstruktur befindlichen Blechfalz umgriffen und eingeklemmt ist - selbstverständlich muß dieser Blechfalz mit dem Blech auch die entsprechende Isolierung umgreifen. Vorteilhafterweise ist diese Isolierung eine auf dem Blechfalz haftende keramische Schicht.

Ein Blechfalz weist an einer Stirnseite, an der er gefalzt ist, vielfach relativ starke Veränderungen des metallischen Gefüges, aus dem er besteht, auf. Um möglichen Materialschäden durch Sprödbrüche oder dergleichen bei einer späteren betrieblichen Belastung vorzubeugen, ist der Blechfalz in der Nähe der Stirnseite mit einer ein Lot enthaltenden, vorzugsweise aus Lot bestehenden, Loteinlage versehen. Diese Loteinlage bewirkt eine gewissen Verlötung der aufeinanderliegenden Teile des Blechfalzes miteinander und verhindert so sicher ein Aufbrechen des Blechfalzes. Selbstverständlich muß die Loteinlage von dem zu isolierenden Blech der Innenstruktur beabstandet sein.

Vorteilhafterweise, besonders im Hinblick auf eine günstige Befestigung des Wabenkörpers in einem Leitungssystem, ist jede Stützstruktur von einem zugehörigen Mantelrohr umgeben und in diesem befestigt. Ein solches Mantelrohr eignet sich gut zur Bildung von Verbindungen mit weiteren Rohren; je nach Anforderung kann es mit einem Flansch versehen sein.

Vorteilhafterweise ist das Blech in der Innenstruktur des erfindungsgemäßen Wabenkörpers gewellt, wodurch eine Wellhöhe und eine Wellenlänge definiert sind. Das Vorsehen eines gewellten Bleches zur Bildung des erfindungsgemäßen Wabenkörpers ist wichtig zur Realisierung von Merkmalen vieler an sich bekannten Bauformen. Darüber hinaus hat eine Wellung in einem zum Aufbau eines erfindungsgemäßen Wabenkörpers verwendeten Blech einen besonderen Vorteil im Zusammenhang mit dem Vorsehen jeweils eines Blechfalzes zur Halterung des Bleches in jeder Stützstruktur. In der Regel sind die Wellen eines gewellten Bleches in einem Wabenkörper parallel zur Achse ausgerichtet; ein Blechfalz, der in einer Stützstruktur an der Stirnseite eines erfindungsgemäßen Wabenkörpers ein nach bekannter Art gewelltes Blech umgreift, muß seinerseits gewellt sein. Vorteilhafterweise werden ein Blech und die dieses Blech umgreifenden Blechfalze gleichzeitig gewellt; glatte Blechfalze werden auf das glatte Blech geschoben, und anschließend wird die Wellung in an sich bekannter Art eingebracht. Ein gewellter Falz hat den großen Vorteil, daß er nicht oder allenfalls unwesentlich knittert, wenn er zur Bildung eines gewickelten oder verschlungenen Wabenkörpers abgebogen wird. Es hat sich gezeigt, daß glatte Blechfalze bei einer solchen Wicklung oder Verschlingung leicht knittern können, woraus u.U. eine Beeinträchtigung der Festigkeit eines aus einem solchen Blechfalz gebildeten Rahmens beeinträchtigt werden kann.

Die Vorteile, die aus der Verwendung gewellter Bleche resultieren, werden in besonderer Weise dann erschlossen, wenn zur Bildung des Wabenkörpers nur gewellte Bleche, vorzugsweise gewellte Bleche mit zwei verschiedenen Wellungen, die abwechselnd aufeinander geschichtet werden, verwendet werden.

Bei der Bildung des erfindungsgemäßen Wabenkörpers aus einem gewellten ersten Blech mit einer ersten Wellenlänge und einer ersten Wellhöhe sowie einem zweiten Blech mit einer zweiten Wellenlänge und einer zweiten Wellhöhe wird vorteilhafterweise die erste Wellenlänge etwa gleich der zweiten Wellenlänge gewählt; auf diese Weise können sich die Wellungen ineinander verzahnen, was zur Erzielung einer hohen mechanischen Festigkeit von Bedeutung sein kann. Zwar ist die Verzahnung zweier Wellungen ineinander nicht unbedingt gleichmäßig, wenn die Wellungen gewickelt oder verschlungen werden; durch entsprechende Abstimmung der Wellenlängen aufeinander kann die Verzahnung gegebenenfalls optimiert werden. Günstigerweise werden deutlich voneinander abweichende erste Wellhöhen und zweite Wellhöhen gewählt, um auszuschließen, daß die Wellungen ohne Freilassung hinreichend großer Kanäle über größere Bereiche unmittelbar aufeinander liegen. Die erste Wellhöhe wird vorteilhafterweise größer als die zweite Wellhöhe gewählt, und zwar insbesondere zumindest doppelt so groß, vorzugsweise dreimal so groß.

Sowohl die Innenstruktur als auch die Stützstruktur des Wabenkörpers sind günstigerweise jeweils in Lagen geschichtet (wie vorstehend an einem Spezialfall erläutert), und die Lagen sind nach Art einer Spirale oder Evolvente um die Achse gewunden. Derartige Ausgestaltungen sind in vielfältigen Formen an sich bekannt und können in Ausführungen der Erfindung einbezogen werden.

Im Rahmen einer besonders vorteilhaften Weiterbildung ist die Innenstruktur durch elektrische Isolierungen zwischen den Lagen unterteilt. Wie bereits erwähnt, stellt die Erfindung nur sehr geringe Anforderungen an die mechanische Eigenstabilität der Innenstruktur; dementsprechend eignet sich die Innenstruktur ganz besonders zur Ausbildung eines Strompfades mit einem einer vorgegebenen Stromquelle angepaßten elektrischen Widerstand, wozu Unterteilungen in Form von Isolierschichten und Spalten vorgesehen werden können. Es ist durchaus denkbar, mit der Erfindung in elektrisch beheizbaren Wabenkörpern zur Verwendung in Abgassystemen von Kraftfahrzeugen, zu deren Beheizung elektrische Leistungen von 2 kW typisch zur Verfügung gestellt werden müssen, elektrische Widerstände zwischen 0,05 Ohm (zuträglich für eine elektrische Spannungsquelle mit etwa 12 V Spannung) und 20 Ohm (zuträglich für eine elektrische Spannungsquelle mit etwa 200 V Spannung - Spannung des öffentlichen Stromnetzes in Europa) zu realisieren.

Da je nach Ausführung der Stützstruktur die wesentlichen tragenden Teile des Wabenkörpers sind, sind günstigerweise in jeder Stützstruktur die Lagen weitgehend vollständig untereinander kraftschlüssig verbunden, insbesondere durch Hartlötungen. Da die Stützstrukturen an den Stirnseiten des Wabenkörpers angeordnet sind, kann dieser möglicherweise ohne vorheriges Einbringen von Lot zusammengebaut und dann zur Aufbringung des Lotes in ein das Lot enthaltendes Bad oder Wirbelbett getaucht sowie ggf. anschließend zum Aufschmelzen des Lotes wärmebehandelt werden. Auch diese Möglichkeit, die bekannt ist zur Herstellung einfacher Wabenkörper, kann im Sinne der Erfindung zur Herstellung kompliziert aufgebauter, elektrisch beheizbarer Wabenkörper verwendet werden.

Bei einer zusätzlichen Weiterbildung sind in jeder Stützstruktur des Wabenkörpers zwischen Lagen, worunter geschichtete Blechfalze oder dergleichen zu verstehen sind, glatte Blechbänder und/oder gewellte Blechbänder eingefügt und kraftschlüssig mit den Lagen verbunden. Durch das Einfügen solcher Blechbänder können einerseits in der Innenstruktur stabile Luftspalte gebildet werden, was für eine elektrisch beheizbare Innenstruktur wichtig sein kann; andererseits kann durch das Einfügen solcher Blechbänder die Wärmekapazität einer Stützstruktur verringert werden. Auch dies ist möglicherweise wichtig für einen Wabenkörper mit elektrisch beheizbarer Innenstruktur, da gleichzeitig mit der Innenstruktur auch jeder Rahmen aufgeheizt werden muß, was um so mehr Energie erfordert, je höher die Wärmekapazität der Stützstruktur ist.

Die Erfindung bezieht sich auch auf ein Verfahren zur Herstellung eines Wabenkörpers mit den erfindungsgemäßen gegenständlichen Merkmalen. Im Rahmen dieses Verfahrens wird zunächst zumindest ein etwa rechteckiges Blech mit zwei einander gegenüberliegenden, etwa senkrecht zu einer Achse ausgerichteten Stirnkanten bereitgestellt; jede Stirnkante wird mit einem Blechfalz umgriffem, welcher eine auf das Blech aufzulegende keramische Schicht aufweist; anschließend werden das Blech und die Blechfalze gewellt, und zwar stumpfwinklig, vorzugsweise etwa senkrecht, zur Achse; dann wird das Blech mit den Blechfalzen in Lagen geschichtet und um die Achse gewunden; anschließend werden die Blechfalze, die die Stützstrukturen bilden, mit Mantelrohren umfaßt, und schließlich werden kraftschlüssige Verbindungen zwischen den mit den Blechfalzen gebildeten Lagen ausgebildet. Solche kraftschlüssigen Verbindungen können Hartlötungen sein; diese Hartlötungen sind z.B. auszubilden, indem die Stützstrukturen in ein Bad oder Wirbelbett mit einem Lot getaucht und im Anschluß daran zum Aufschmelzen des Lotes wärmebehandelt werden.

Vorteilhafterweise erfolgt die Herstellung des erfindungsgemäßen Wabenkörpers aus einer Mehrzahl, vorzugsweise einer Vielzahl von Blechen, wobei gegebenenfalls alle Bleche mit einer von zwei Wellungen gewellt sind.

Die weitere Erläuterung der Erfindung erfolgt anhand der in der Zeichnung dargestellten Ausführungsbeispiele; zur Verdeutlichung der spezifischen Eigenschaften der Erfindung ist die Zeichnung teilweise schematisch und/oder verzerrt ausgeführt. Im einzelnen zeigen:
- Fig. 1: ein mit Blechfalzen versehenes gewelltes Blech zur Verwendung im Rahmen der Erfindung;
- Fig. 2: einen axialen Schnitt durch ein Ausführungsbeispiel des erfindungsgemäßen Wabenkörpers;
- Fig. 3: eine teilweise schematisierte Schrägansicht eines weiteren Ausführungsbeispiels;
- Fig. 4: einen Querschnitt durch eine Anordnung aus unterschiedlich gewellten Blechen;
- Fig. 5: eine Teilansicht der Stützstruktur eines erfindungsgemäßen Wabenkörpers; und
- Fig. 6: einen Blechfalz mit einer zusätzlichen Loteinlage.

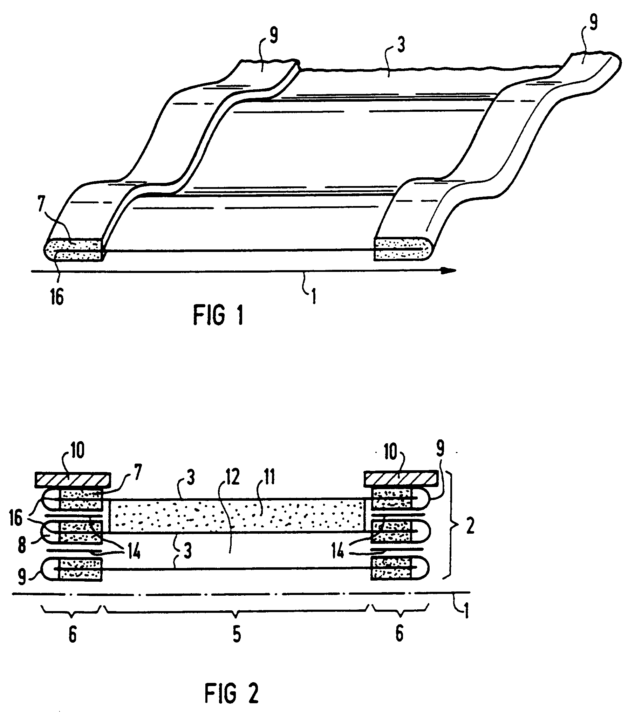

Fig. 1 zeigt ein Blech 3, dessen Stirnkanten 16 von Blechfalzen 9 umgriffen sind. Zwischen den Blechfalzen 9 und dem Blech 3 befindet sich eine Isolierschicht 16, beispielsweise eine keramische Beschichtung an jedem Blechfalz 9. Das Blech 3 und die Blechfalze 9 sind gewellt, und zwar senkrecht zur Achse 1 des mit dem Blech 3 aufzubauenden Wabenkörpers.

Fig. 2 ist ein schematisierter axialer Längsschnitt durch ein Ausführungsbeispiel des erfindungsgemäßen Wabenkörpers. Entlang der Achse 1 ist der Wabenkörper begrenzt durch Stirnflächen 2. An jeder Stirnfläche 2 liegt eine Stützstruktur 6, die eine mit in Lagen geschichteten und gewundenen Blechen 3 gebildete Innenstruktur 5 stützt. Jede Stützstruktur 6 enthält Blechfalze 9, die jeweils eine Stirnkante 16 eines Bleches 3 umgreifen. Von den Blechen 3 sind die Blechfalze 9 isoliert durch keramische Isolierschichten 7 und Spalte 8. In jeder Stützstruktur 6 ist zwischen zwei durch Blechfalze 9 gegebene Lagen ein Blechband 14 eingefügt; dieses Blechband 14 verringert einerseits die Wärmekapazität in der Stützstruktur 6, und gewährleistet andererseits in der Innenstruktur 5 Abstände zwischen benachbarten Lagen. Hierdurch können in der Innenstruktur 5 Isolierungen 11, 12 vorgesehen werden. Solche Isolierungen können Spalte 12 sein; auch kann zwischen zwei benachbarte Lagen der Bleche 3 eine keramische Isolierschicht 11 oder dergleichen eingefügt sein. Eine solche Isolierschicht 11 kann eine keramische Fasermatte sein, die zwischen zwei Lagen eingefügt wird, oder eine keramische Beschichtung auf einem der Bleche 3. Jede Stützstruktur 6 ist eingefaßt von einem Mantelrohr 10, woraus sich zusätzliche Stabilität für den Wabenkörper ergibt.

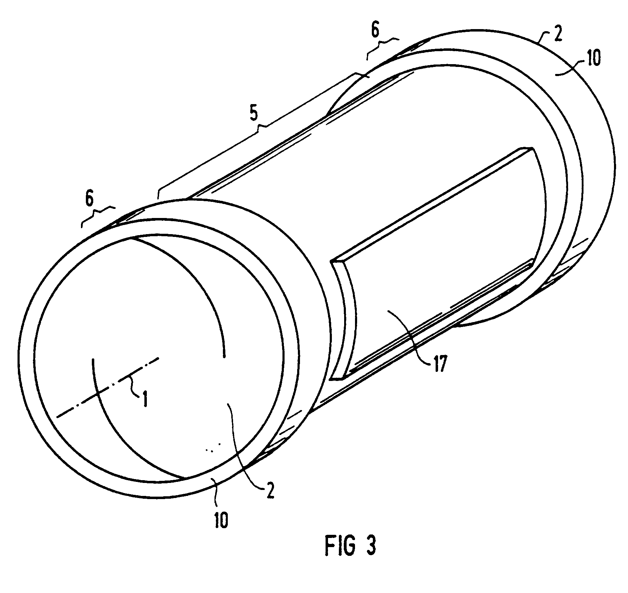

Fig. 3 zeigt eine Schrägansicht eines Wabenkörpers gemäß der Erfindung. Entlang der Achse 1 ist der Wabenkörper von Stirnflächen 2 begrenzt. An jeder Stirnfläche 2 befindet sich eine Stützstruktur 6, eingefaßt jeweils von einem Mantelrohr 10. Zwischen den voneinander beabstandeten Stützstrukturen 6 liegt die elektrisch direkt beheizbare Innenstruktur 5. Zur Zuführung und Abführung des zur Beheizung erforderlichen elektrischen Stromes ist die Innenstruktur 5 mit Anschlüssen 17 versehen; entsprechend der gewählten Perspektive ist nur ein Anschluß 17 sichtbar.

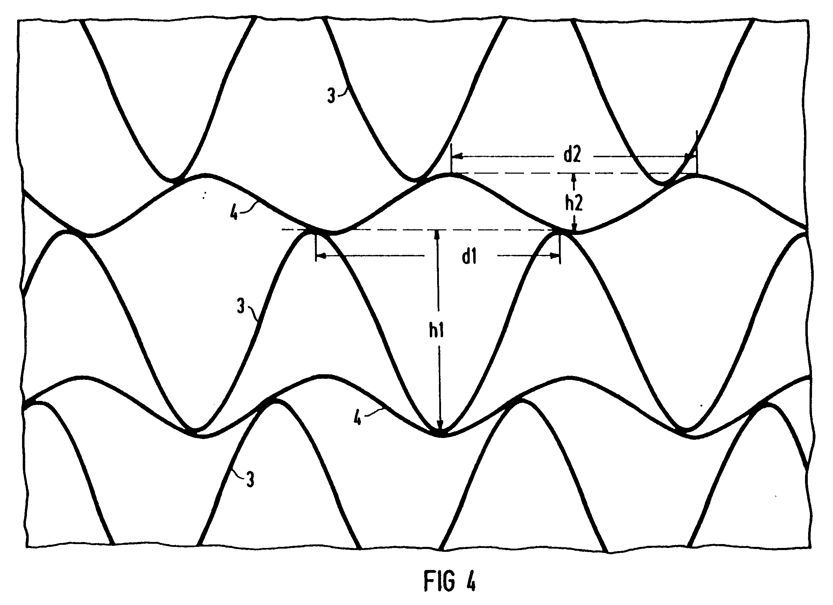

Fig. 4 zeigt das Zusammenspiel aufeinandergeschichteter, unterschiedlich gewellter Bleche 3 und 4. Erste Bleche 3 haben eine in Richtung ihrer Wellung zu bestimmende Wellenlänge d1 sowie eine Wellhöhe h1, die die Amplitude der Wellung ist. Ein zweites Blech 4 hat eine entsprechende Wellenlänge d2 sowie eine Wellhöhe h2, wobei die Wellhöhe h2 eines zweiten Bleches etwa einem Drittel der Wellhöhe h1 eines ersten Bleches 3 entspricht. Die Wellenlänge d2 des zweiten Bleches 4 entspricht ungefähr der Wellenlänge d1 des ersten Bleches 3. Es versteht sich, daß das Zusammenspiel erster Bleche 3 und zweiter Bleche 4 auch davon abhängt, ob die Bleche 3, 4 zusätzlich zu der Schichtung gewunden werden; in einem solchen Fall können sich Abweichungen von den dargestellten Mustern ergeben. Die erwähnte bevorzugte Wahl für die Wellenlängen d1 und d2 sowie die Wellhöhen h1 und h2 hat sich jedoch allgemein als vorteilhaft erwiesen.

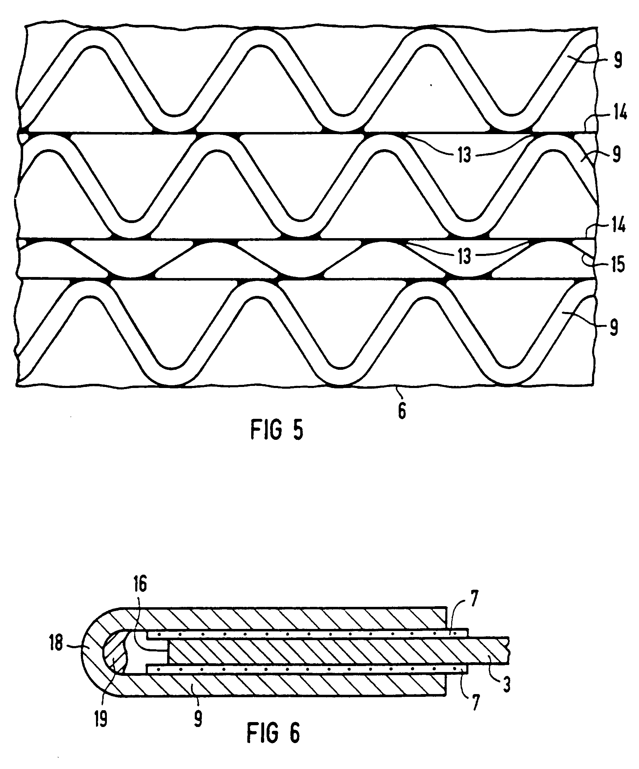

Fig. 5 zeigt eine Teilansicht der Stützstruktur 6 eines erfindungsgemäßen Wabenkörpers; die Stützstruktur 6 besteht aus aufeinandergeschichteten Blechfalzen 9 sowie glatten Blechstreifen 14 und gewellten Blechstreifen 15. Jeder Blechfalz 9 umgreift ein (nicht dargestelltes) Blech der (ebenfalls nicht dargestellten) Innenstruktur; die Blechstreifen 14 und 15 ragen nicht in die Innenstruktur hinein, sondern sind im wesentlichen auf die Stützstruktur 6 beschränkt. Fig. 5 zeigt ein Merkmal einer besonders vorteilhaften Ausführung der Erfindung, nämlich die vollständige Verlötung der Stützstruktur 6. In der Tat befinden sich an jeder Berühungsstelle zwischen Blechfalzen 9 und Blechstreifen 14 und 15 Hartlötungen 13. Damit wird die Stützstruktur 6 ganz außerordentlich stabil, wobei aber immer noch die Möglichkeit verbleibt, die Innenstruktur durch das Einfügen von Spalten, Isolierschichten oder dergleichen so zu gestalten, daß ein Strompfad mit einem relativ hohen, den Vorgaben der Beheizung entsprechenden elektrischen Widerstand erhalten wird. Die Robustheit des erfindungsgemäßen Wabenkörpers wird durch diese Spalte usw. nicht wesentlich beeinträchtigt.

Fig. 6 zeigt einen Blechfalz 9, der ein von Isolierschichten 7 eingefaßtes Blech 3 umgreift. Der Blechfalz 9 ist an einer Stirnseite 18 gefalzt und weist in deren Nähe und beabstandet von der Stirnkante 16 des Bleches 3 eine Loteinlage 19 auf. Diese Loteinlage 19 bewerkstelligt eine gewisse Verlötung aufeinanderliegender Bereiche des Blechfalzes 9 und stellt so zusätzliche Festigkeit her, die eine durch die Falzung eventuell eingeschränkte Festigkeit des Blechfalzes 9 an der Stirnseite 18 vorteilhaft ergänzt. Es sei noch bemerkt, daß anstelle eines gefalzten Blechfalzes 9 auch ein Blechfalz 9 aus zwei aufeinanderliegenden, an der Stirnseite 18 verlöteten Teilen im Rahmen der Erfindung verwendbar ist.

In dem erfindungsgemäßen Wabenkörper sind Bestandteile, die mechanische Festigkeit gewährleisten, getrennt von Bestandteilen, die unmittelbar elektrisch beheizbar und gemäß einer Vorgabe für den elektrischen Widerstand ausgestaltet sind. Der Wabenkörper ist einfach herstellbar und weist eine besonders hohe Robustheit auf.

## Patentansprüche

1. Wabenkörper, der
a) eine Achse (1) hat, entlang welcher er von einem Fluid durchsetzbar ist;
b) entlang der Achse (1) von zwei einander gegenüberliegenden Stirnseiten (2) begrenzt ist;
c) eine aus einer Mehrzahl von Blechlagen (3, 4) gebildete Innenstruktur (5) aufweist, durch die zur Beheizung ein elektrischer Strom leitbar ist;
**dadurch gekennzeichnet**, daß der Wabenkörper
d) zum Halten der Innenstruktur (5) an jeder Stirnseite (2) jeweils eine metallische Stützstruktur (6) aufweist, die die einzelnen Blechlagen (3, 4) halten, und daß
e) zwischen der Innenstruktur (5) und der Stützstruktur (6) eine elektrische Isolierung (7, 8) liegt.

2. Wabenkörper nach Anspruch 1, bei dem die Blechlagen (3, 4) in jeder Stützstruktur (6) durch Reibung gehaltert sind.

3. Wabenkörper nach Anspruch 1 oder 2, bei dem in jeder Stützstruktur (6) die Isolierung (7, 8) von zumindest einer keramischen Schicht (7) gebildet ist.

4. Wabenkörper nach einem der vorhergehenden Ansprüche, bei dem jeder Stützstruktur (6) zumindest einen Blechfalz (9) aufweist, der die Isolierung (7, 8) und die Blechlage (3, 4) umgreift.

5. Wabenkörper nach Anspruch 4, bei dem die Isolierung (7, 8) von einer auf dem Blechfalz (9) haftenden keramischen Schicht (7) gebildet ist.

6. Wabenkörper nach Anspruch 4 oder 5, bei dem der Blechfalz (9) zwischen dessen Falzkante (18) und der Blechlage (3, 4), eine Loteinlage (19) aufweist, wobei die Loteinlage (19) beabstandet zu der Blechlage (3, 4) ist.

7. Wobenkörper nach einem der vorhergehenden Ansprüche, bei dem jede Stützstruktur (6) von einem zugehörigen Mantelrohr (10) umgeben und in diesem befestigt ist.

8. Wabenkörper nach einem der vorhergehenden Ansprüche, in dem die Blechlagen (3, 4) gewellt sind und eine Wellhöhe (h1, h2) sowie eine Wellenlänge (d1, d2) aufweist.

9. Wabenkörper nach Anspruch 8 mit zumindest einem gewellten ersten Blech (3), das eine erste Wellhöhe (h1) und eine erste Wellenlänge (d1) aufweist, und zumindest einem gewellten zweiten Blech (4), das eine zweite Wellhöhe (h2) und eine zweite Wellenlänge (d2) aufweist.

10. Wabenkörper nach Anspruch 9, bei dem die erste Wellenhöhe (h1) größer ist als die zweite Wellenhöhe (h2), insbesondere zumindest doppelt so groß, vorzugsweise etwa dreimal so groß.

11. Wabenkörper nach Anspruch 11, bei dem die Blechlagen (3, 4) um die Achse (1) gewunden sind.

12. Wabenkörper nach Anspruch 1, bei dem in jeder Stützstruktur (6) die Blechlagen untereinander kraftschlüssig verbunden sind.

13. Wabenkörper nach Anspruch 1, bei dem in jeder Stützstruktur (6) die Blechlagen (3, 4) untereinander durch Hartlötungen (13) verbunden sind.

14. Wabenkörper nach einem der Ansprüche 1 bis 13, bei dem in jeder Stützstruktur (6) glatte Blechbänder (14) und/oder gewellte Blechbänder (15) zwischen den Blechlagen (3, 4) eingefügt und kraftschlüssig mit diesen verbunden sind.

15. Wabenkörper nach einem der Ansprüche 1 bis 13, bei dem in jeder Stützstruktur (6) glatte Blechbänder (14) und/oder gewellte Blechbänder (15) zwischen den Blechlagen (3, 4) eingefügt und durch Hartlötungen (13) mit diesen verbunden sind.

16. Verfahren zur Herstellung eines Wabenkörpers, umfassend folgende Schritte:
a) Bereitstellung zumindest eines etwa rechteckigen Bleches (3, 4) mit zwei einander gegenüberliegenden, etwa senkrecht zu einer Achse (1) ausgerichteten Stirnkanten (16);
b) Umgreifen jeder Stirnkante (16) mit einem Blechfalz (9), der eine auf das Blech (3, 4) aufzulegende keramische Schicht (7) aufweist, zum Bilden von Stützstrukturen (6);
c) Wellen des Bleches (3, 4) und der Blechfalze (9) stumpfwinklig, vorzugsweise etwa senkrecht, zur Achse (1);
d) Schichten des Bleches (3, 4), einschließlich der Blechfalze (9) in Lagen (11, 12), und Winden dieser Lagen um die Achse (1);
e) Einlassen der Stützstrukturen (6) mit Mantelrohren (10); und
f) Herstellung kraftschlüssiger Verbindungen in den Stützstrukturen (6) zwischen den mit den Blechfalzen gebildeten Lagen.

17. Verfahren zur Herstellung eines Wabenkörpers, umfassend folgende Schritte:
a) Bereitstellung zumindest eines etwa rechteckigen Bleches (3, 4) mit zwei einander gegenüberliegenden, etwa senkrecht zu einer Achse (1) ausgerichteten Stirnkanten (16);
b) Umgreifen jeder Stirnkante (16) mit einem Blechfalz (9), der eine auf das Blech (3, 4) aufzulegende keramische Schicht (7) aufweist, zum Bilden von Stützstrukturen (6);
c) Wellen des Bleches (3, 4) und der Blechfalze (9) stumpfwinklig, vorzugsweise etwa senkrecht, zur Achse (1);
d) Schichten des Bleches (3, 4), einschließlich der Blechfalze (9) in Lagen (11, 12), und Winden dieser Lagen um die Achse (1);
e) Einfassen der Stützstrukturen (6) mit Mantelrohren (10) und
f) Herstellung von Hartlötverbindungen (13) in den Stützstrukturen (6) zwischen den mit den Blechfalzen gebildeten Lagen.

18. Verfahren nach Anspruch 16 oder 17, bei dem zumindest ein erstes Blech (3) und zumindest ein zweites Blech (4) bereitgestellt, mit Blechfalzen (9) umgriffen, gewellt und in Lagen geschichtet werden.

19. Verfahren nach einem der Ansprüche 16, 17 oder 18, bei dem eine Vielzahl von Blechen (3, 4) bereitgestellt werden.

## Claims

1. A honeycomb body which
a) has an axis (1) along which a fluid can pass therethrough;
b) is delimited along the axis (1) by two mutually oppositely disposed ends (2); and
c) has an internal structure (5) which is formed by a plurality of sheet metal layers (3, 4) through which an electric current can be passed for heating purposes;
characterised in that the honeycomb body
d) to hold the internal structure (5) at each end (2) has a respective metal support structure (6) which hold the individual sheet metal layers (3, 4), and
e) an electrical insulation (7) is disposed between the internal structure (5) and the support structure (6).

2. A honeycomb body according to claim 1 wherein the sheet metal layers (3, 4) are held in each support structure (6) by friction.

3. A honeycomb body according to claim 1 or claim 2 wherein in each support structure (6) the insulation (7, 8) is formed by at least one ceramic layer (7).

4. A honeycomb body according to one of the preceding claims wherein each support structure (6) has at least one sheet metal fold (3) which embraces the insulation (7, 8) and the sheet metal layer (3, 4).

5. A honeycomb body according to claim 4 wherein the insulation (7, 8) is formed by a ceramic layer (7) adhering on the sheet metal fold (9).

6. A honeycomb body according to claim 4 or claim 5 wherein the sheet metal fold (9) has a solder insert (19) between the fold edge (18) of the sheet metal fold and the sheet metal layer (3, 4), wherein the solder insert (19) is spaced relative to the sheet metal layer (3, 4).

7. A honeycomb body according to one of the preceding claims wherein each support structure (6) is surrounded by an associated casing tube (10) and is fixed therein.

8. A honeycomb body according to one of the preceding claims in which the sheet metal layers (3, 4) are corrugated and have a corrugation height (h1, h2) and a corrugation length (d1, d2).

9. A honeycomb body according to claim 8 having at least one corrugated first metal sheet (3) which has a first corrugation height (h1) and a first corrugation length (d1) and at least one corrugated second metal sheet (4) which has a second corrugation height (h2) and a second corrugation length (d2).

10. A honeycomb body according to claim 9 wherein the first corrugation height (h1) is greater than the second corrugation height (h2) and in particular is at least twice as great and preferably is approximately three times as great.

11. A honeycomb body according to claim 1 wherein the sheet metal layers (3, 4) are wound around the axis (1).

12. A honeycomb body according to claim 1 wherein in each support structure (6) the sheet metal layers (3, 4) are force-lockingly connected together.

13. A honeycomb body according to claim 1 wherein in each support structure (6) the sheet metal layers (3, 4) are connected together by hard-soldering means (13).

14. A honeycomb body according to one of claims 1 to 13 wherein in each support structure (6) smooth sheet metal strips (14) and/or corrugated sheet metal strips (15) are inserted between the sheet metal layers (3, 4) and force-lockingly connected thereto.

15. A honeycomb body according to one of claims 1 to 13 wherein in each support structure (6) smooth sheet metal strips (14) and/or corrugated sheet metal strips (15) are inserted between the sheet metal layers (3, 4) and connected thereto by hard-soldering means (13).

16. A process for the production of a honeycomb body, including the following steps:
a) providing at least one approximately rectangular metal sheet (3, 4) having two mutually oppositely disposed end edges (16) which are oriented approximately perpendicularly to an axis (1);
b) embracing each end edge (16) with a sheet metal fold portion (9) having a ceramic layer (7) to be applied to the metal sheet (3, 4), for forming support structures (6);
c) corrugating the metal sheet (3, 4) and the sheet metal fold portions (9) at an obtuse angle, preferably approximately perpendicularly, with respect to the axis (1);
d) stacking the metal sheet (3, 4) including the sheet metal fold portions (9) in layers (11, 12) and winding said layers about the axis (1);
e) enclosing the support structures (6) with casing tubes (10); and
f) producing force-locking connections in the support structures (6) between the layers formed with the sheet metal fold portions.

17. A process for the production of a honeycomb body, including the following steps:
a) providing at least one approximately rectangular metal sheet (3, 4) having two mutually oppositely disposed end edges (16) which are oriented approximately perpendicularly to an axis (1);
b) embracing each end edge (16) with a sheet metal fold portion (9) having a ceramic layer (7) to be applied to the metal sheet (3, 4), for forming support structures (6);
c) corrugating the metal sheet (3, 4) and the sheet metal fold portions (9) at an obtuse angle, preferably approximately perpendicularly, with respect to the axis (1);
d) stacking the metal sheet (3, 4) including the sheet metal fold portions (9) in layers (11, 12) and winding said layers about the axis (1);
e) enclosing the support structures (6) with casing tubes (10); and
f) producing hard-solder connections (13) in the support structures (6) between the layers formed with the sheet metal fold portions.

18. A process according to claim 16 or claim 17 wherein at least one first metal sheet (3) and at least one second metal sheet (4) are provided, embraced with sheet metal fold portions (9), corrugated and stacked in layers.

19. A process according to one of claims 16, 17 and 18 wherein a plurality of metal sheets (3, 4) are provided.

## Revendications

1. Corps alvéolaire, qui
a) comporte un axe (1) le long duquel il peut être traversé par un fluide ;
b) est délimité le long de l'axe (1) par deux faces frontales (2) situées l'une en face de l'autre ;
c) comporte une structure intérieure (5) constituée de plusieurs couches de tôles (3, 4), dans laquelle peut passer un courant électrique de chauffage ;
caractérisé en ce que le corps alvéolaire
d) comporte sur chacune des faces frontales (2) une structure métallique de soutien (6) destinée au maintien de la structure intérieure (5), lesquelles maintiennent les différentes couches de tôles (3, 4), et en ce que
e) une isolation électrique (7, 8) est située entre la structure intérieure (5) et la structure de soutien (6).

2. Corps alvéolaire selon la revendication 1, dans lequel les couches de tôles (3, 4) sont maintenues par frottement dans chaque structure de soutien (6).

3. Corps alvéolaire selon la revendication 1 ou 2, dans lequel l'isolation (7, 8) dans chaque structure de soutien (6) est constituée d'au moins une couche en céramique (7).

4. Corps alvéolaire selon l'une quelconque des revendications précédentes, dans lequel chaque structure de soutien (6) comporte au moins un repli (9) de tôle qui enserre l'isolation (7, 8) et la couche de tôle (3, 4).

5. Corps alvéolaire selon la revendication 4, dans lequel l'isolation (7, 8) est constituée d'une couche en céramique (7) qui adhère sur le repli (9) de tôle.

6. Corps alvéolaire selon la revendication 4 ou 5, dans lequel le repli (9) de tôle comporte un insert brasé (19) entre son bord replié (18) et la couche de tôle (3, 4), l'insert brasé (19) étant écarté de la couche de tôle (3, 4).

7. Corps alvéolaire selon l'une quelconque des revendications précédentes, dans lequel chaque structure de soutien (6) est ceinturée par un tube de protection (10) associé, et fixée dans ce dernier.

8. Corps alvéolaire selon l'une quelconque des revendications précédentes, dans lequel les couches de tôles (3, 4) sont ondulées et ont une hauteur d'onde (h1, h2), ainsi qu'une longueur d'onde (d1, d2).

9. Corps alvéolaire selon la revendication 8, comportant au moins une première tôle ondulée (3) ayant une première hauteur d'onde (h1) et une première longueur d'onde (d1), et au moins une deuxième tôle ondulée (4) ayant une deuxième hauteur d'onde (h2) et une deuxième longueur d'onde (d2).

10. Corps alvéolaire selon la revendication 9, dans lequel la première hauteur d'onde (h1) est plus importante que la deuxième hauteur d'onde (h2), notamment au moins deux fois plus importante, de préférence environ trois fois plus importante.

11. Corps alvéolaire selon la revendication 1, dans lequel les couches de tôles (3, 4) sont enroulées autour de l'axe (1).

12. Corps alvéolaire selon la revendication 1, dans lequel les couches de tôles (3, 4) sont reliées entre elles par adhérence dans chaque structure de soutien (6).

13. Corps alvéolaire selon la revendication 1, dans lequel les couches de tôles (3, 4) sont reliées entre elles par des brasages forts (13) dans chaque structure de soutien (6).

14. Corps alvéolaire selon l'une quelconque des revendications 1 à 13, dans lequel des bandes (14) de tôle lisse et/ou des bandes (15) de tôle ondulée sont insérées dans chaque structure de soutien (6) entre les couches de tôles (3, 4), et sont reliées à ces dernières par adhérence.

15. Corps alvéolaire selon l'une quelconque des revendications 1 à 13, dans lequel des bandes (14) de tôle lisse et/ou des bandes (15) de tôle ondulée sont insérées dans chaque structure de soutien (6) entre les couches de tôles (3, 4), et sont reliées à ces dernières par des brasages forts (13).

16. Procédé destiné à la fabrication d'un corps alvéolaire, comportant les phases suivantes :
a) mise à disposition d'au moins une tôle (3, 4) approximativement rectangulaire comportant deux arêtes frontales (16) orientées sensiblement perpendiculairement à un axe (1) ;
b) entourage de chaque arête frontale (16) par un repli (9) de tôle qui comporte une couche en céramique (7) à appliquer sur la tôle (3, 4), afin de former une structure de soutien (6) ;
c) ondulation de la tôle (3, 4) et du repli (9) de tôle suivant un angle obtus, de préférence à peu près perpendiculairement à l'axe (1) ;
d) empilage de la tôle (3, 4), y compris du repli (9) de tôle, en couches (11, 12), et enroulement de ces couches autour de l'axe (1) ;
e) ceinturage des structures de soutien (6) par des tubes de protection (10) ; et
f) réalisation de liaisons par adhérence entre les couches constituées des replis de tôle dans les structures de soutien (6).

17. Procédé destiné à la fabrication d'un corps alvéolaire, comportant les phases suivantes :
a) mise à disposition d'au moins une tôle (3, 4) approximativement rectangulaire comportant deux arêtes frontales (16) orientées sensiblement perpendiculairement à un axe (1) ;
b) entourage de chaque arête frontale (16) par un repli (9) de tôle qui comporte une couche en céramique (7) à appliquer sur la tôle (3, 4), afin de former une structure de soutien (6) ;
c) ondulation de la tôle (3, 4) et du repli (9) de tôle suivant un angle obtus, de préférence sensiblement perpendiculairement à l'axe (1) ;
d) empilage de la tôle (3, 4), y compris du repli (9) de tôle, en couches (11, 12), et enroulement de ces couches autour de l'axe (1) ;
e) ceinturage des structures de soutien (6) par des tubes de protection (10) ; et
f) réalisation de liaisons par brasages forts (13) entre les couches constituées des replis de tôle dans les structures de soutien (6).

18. Procédé selon la revendication 16 ou 17, dans lequel au moins une première tôle (3) et au moins une deuxième tôle (4) sont mises à disposition, entourées de replis (9) de tôle, ondulées, et empilée en couches.

19. Procédé selon l'une des revendications 16, 17 ou 18, dans lequel une pluralité de tôles (3, 4) sont mises à disposition.
